# EUROPEAN PATENT SPECIFICATION

(11) **EP 2 513 229 B1**
(45) Date of publication and mention of the grant of the patent: **23.04.2014**
(21) Application number: 10785013.3
(22) Date of filing: 15.11.2010
(51) Int. Cl.: C09B 29/00, C09B 29/08, C09B 29/36, D06P 1/16

(54) **DISPERSE AZO DYES, A PROCESS FOR THE PREPARATION THEREOF AND THE USE THEREOF**
AZO-DISPERGIERFARBSTOFFE, VERFAHREN ZU DEREN HERSTELLUNG UND DEREN VERWENDUNG
COLORANTS AZOÏQUES DISPERSÉS, PROCÉDÉ POUR LEUR PRÉPARATION ET LEUR UTILISATION

(30) Priority: 16.12.2009 EP 09179457
(43) Date of publication of application: 24.10.2012
(73) Proprietor: Huntsman Advanced Materials (Switzerland) GmbH, 4057 Basel (CH)
(72) Inventor: PETERMANN, Ralf, CH-4056 Basel (CH); LAUK, Urs, F-68510 Magstatt-le-Haut (FR); MURER, Kevin, CH-4056 Basel (CH); SUPPIGER, Christian, CH-6003 Luzern (CH)
(86) International application number: PCT/EP2010/067436
(87) International publication number: WO 2011/072966

(56) References cited:
- DE-A1- 2 739 769
- US-A- 3 878 189
- US-A- 5 539 088
- FINZI CESARE ET AL: "Costituzione chimica e sapore dolce", GAZZETTA CHIMICA ITALIANA, SOCIETA CHIMICA, ITALIANA, ROME; IT, vol. 68, 1 January 1938 (1938-01-01), pages 132-139, XP009135272, ISSN: 0016-5603

## Description

The present invention relates to disperse azo dyes based on amines of N-Alkyl -1,1,3-triox-2,3-dihydrobenzisothiazoles (N-alkyl saccharines) as the diazotizing component, a process for the preparation of such dyes and to the use thereof in dyeing or printing semi-synthetic and especially synthetic hydrophobic fibre materials, more especially textile materials.

Azo dyes based on amines of N-Alkyl -1,1,3-triox-2,3-dihydrobenzisothiazoles as the diazotizing component are known, for example, from US Patent No. 3,878,189. It has, however, been found that the dyeings or prints obtained using the currently known dyes do not in all cases satisfy today's requirements, especially in respect of light fastness and fastness to washing. There is therefore a need for new dyes that especially have good washing fastness properties.

The document, US 3878189, is directed to disperse azo compounds, wherein 1,2-benzisothiazolon-1,1-dioxide derivative as diazo component coupled to various heterocyclic or carbocyclic coupling components.

Surprisingly, we found that azo dyes based on N-alkyl saccharines as the diazotizing component show very good light fastness and excellent washing fastness results.

The present invention relates to dyes of formula 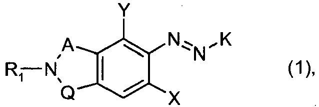 wherein either A is -CO- and Q is -SO₂- or A is -SO₂- and Q is -CO-,
R₁ denotes C₁-C₆alkyl, benzyl, allyl, -CₙH₂ₙ-COOR or -CₙH₂ₙ-CN, wherein n is a number from 1 to 3 and R represents hydrogen or C₁-C₆alkyl,
X is nitro, cyano or halogen,
Y is hydrogen, nitro, cyano or halogen, and
K is the radical of a coupling component of the benzene, naphthalene, pyrazolone, 6-hydroxypyridone-(2) or acetoacetic acid arylamide series.

Depending on the position of the substituents in the phenyl moiety of the diazotizing component, the dyes according to the invention correspond to formula (1a) or (1b) 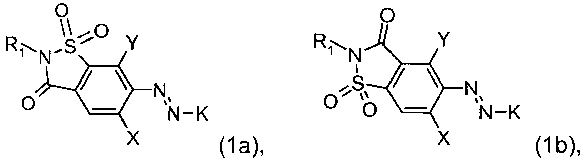 wherein R₁, X, Y and K are as defined above.

Preference is given to dyes formula (1), wherein K denotes a radical of formula (2a) - (2d) 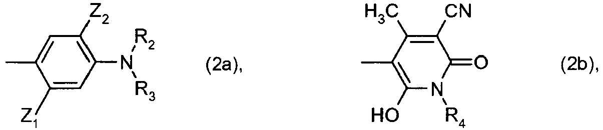 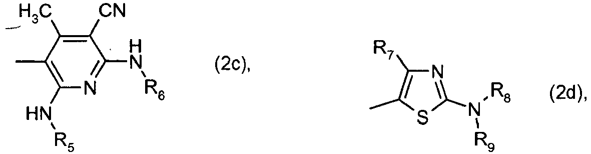 wherein Z₁ is hydrogen, halogen, C₁-C₆alkyl, C₁-C₆alkoxy which is unsubstituted or substituted with one or more C₁-C₃alkylcarbonyloxy groups, benzyl, -NH-SO₂-R₁₀ or -NH-CO-R₁₁, with R₁₀ and R₁₁ being methyl or ethyl,
Z₂ is hydrogen, halogen or C₁-C₆alkoxy which is unsubstituted or substituted with one or more C₁-C₃alkylcarbonyloxy groups,
R₂ and R₃ are each independently of the other hydrogen, vinyl, allyl or C₁-C₆alkyl which is unsubstituted or substituted by hydroxy, cyano, C₁-C₆alkylcarbonyloxy, C₁-C₆alkyloxycarbonyl, C₁-C₆ alkoxy or C₆-C₂₄aryl,
R₄ is hydrogen, vinyl, allyl or C₁ - C₆ alkyl which is unsubsituted or substituted by cyano, carboxy, hydroxy, C₁-C₆alkoxy, C₂-C₈alkoxyalkoxy or C₆-₂₄aryl,
R₅ and R₆ are each independently of the other hydrogen, vinyl, allyl or C₁-C₆ alkyl which is unsubsituted or substituted by cyano, carboxy, hydroxy, C₁-C₆alkoxy-, C₂-C₈alkoxyalkoxy- or C₆-C₂₄aryl,
R₇ is C₁-C₆alkyl, C₆-C₂₄aryl or benzyl. and
R₈ and R₉ are each independently of the other hydrogen, vinyl, allyl or C₁-C₆ alkyl which is unsubsituted or substituted by cyano-, carboxy, hydroxy, C₁-C₆alkoxy- or C₆-C₂₄aryl.

Any radical denoting alkyl may be a straight-chain or branched alkyl radical.

Examples of alkyl groups include methyl, ethyl, n-propyl, isopropyl, n-butyl, isobutyl, sec-butyl, tert-butyl, n-pentyl, isopentyl, neopentyl and n-hexyl.

C₁-C₆alkoxy may be, for example, methoxy, ethoxy, n-propoxy, isopropoxy, n-butoxy, iso-butoxy, sec-butoxy, tert-butoxy, n-pentoxy, neopentoxy or n-hexoxy.

Any radical denoting halogen may be fluorine, chlorine or bromine.

C₆-C₂₄aryl groups are, for example, phenyl, tolyl, mesityl, isityl, naphthyl and anthryl.

Y is preferably hydrogen or bromo.

R₁ is preferably ethyl.

Preference is given to azo dyes of formula (1), wherein K denotes a radical of formula (2a), wherein Z₁ is methyl or acetylamino, Z₂ represents hydrogen or methoxy and R₂ and R₃ are each independently of the other ethyl, n-propyl, allyl, 2-methoxyethyl, 2-cyanoethyl, benzyl or methoxycarbonylmethyl.

Further preference is given to azo dyes of formula (1), wherein K denotes a radical of formula (2b), wherein R₄ is ethyl or 3-methoxypropyl.

Another preferred embodiment is an azo dye of formula (1), wherein K denotes a radical of formula (2c), wherein R₅ and R₆ are each independently of the other hydrogen, 2-methoxyethyl, 3-methoxypropyl, 3-(2-methoxyethoxy)propyl, phenyl or benzyl.

Further preference is given to azo dyes of formula (1), wherein K denotes a radical of formula (2d), wherein R₇ is phenyl and R₈ and R₉ denote ethyl.

Dyes of formula 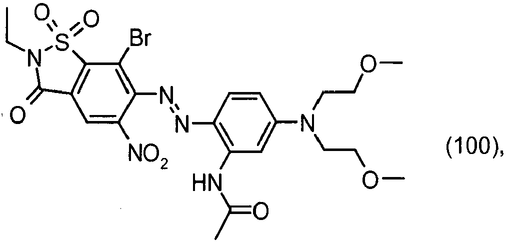 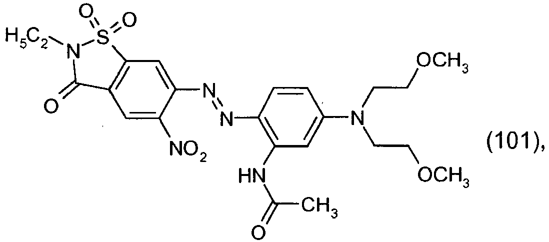 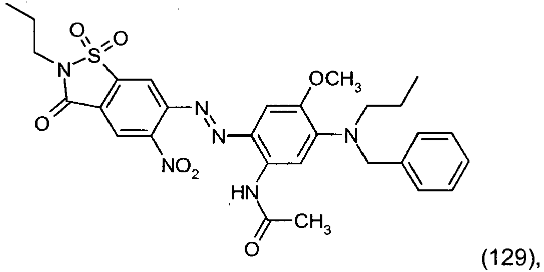 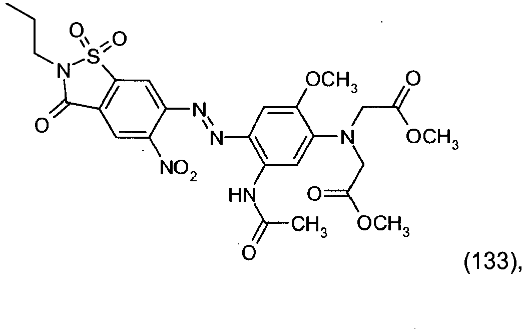 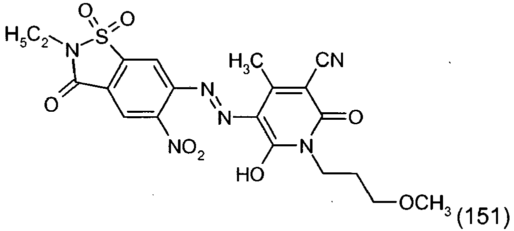 and 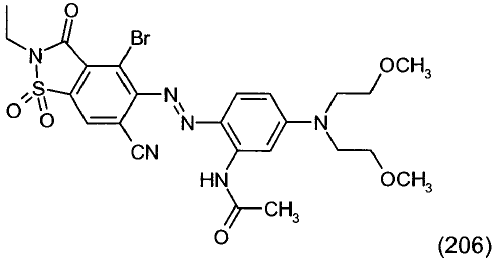 are particularly preferred.

The present invention also relates to a process for the preparation of an azo dye of formula (1) according to claim 1, which comprises diazotizing a compound of formula (3) 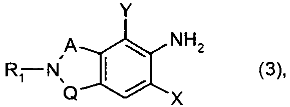 wherein R₁ and A, Q, X and Y are as defined above, according to a conventional method and then coupling the diazotized compound with a coupling component of formula K-H, wherein K is as defined in claim 1.

The diazotizing components (3) can be prepared in the following manner:
Suitable starting compounds are 5-nitrosaccharin (5-nitro-1,1-dioxo-1,2-benzothiazol-3-one) or 6-nitrosaccharin (6-nitro-1,1-dioxo-1,2-benzothiazol-3-one), which can be prepared as described in J. Macromol. Sci. , A3(5), pp. 941 - 958 (1969).

The nitrosaccharines are alkylated according to Eur. J. Org. Chem. 2006, 4483-4489.

The alkylation can be carried out by using alkylhalogenides or alkylsulfates in dimethylformamide containing sodium carbonate at 100 °C.

The following reduction can be done, for example, with tin or iron in hydrochloric acid, thus yielding the compounds of formula (4a) or (4b):

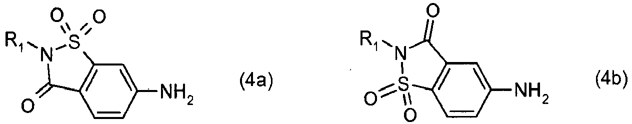

The aminosaccharines can be mono- or dihalogenated. The halogenation can be carried out, for example, by reacting the compounds of formula (4a) or (4b) with sodium acetate and halogen in acetic acid at 90 to 100 °C. This leads to diazotizing compounds (5a) and (5b) 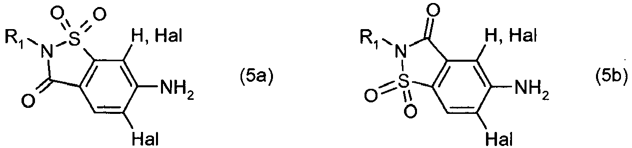 with Hal = Cl, Br.

Compounds (4a) and (4b) can also be substituted with a nitro group. Prior to the nitration reaction, the amino compound can be protected by reaction with acetic anhydride or alkyl chloroformiates. The nitration is done with nitrosulfuric acid in sulphuric acid at 60 to 90 °C. The deprotection in acidic or slightly basic medium leads to the diazotizing compounds (6a) and (6b).

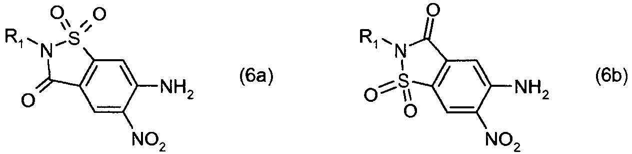

The compound (6a) and (6b) can additionally be halogenated thus yielding the diazotizing compounds (7a) and (7b)

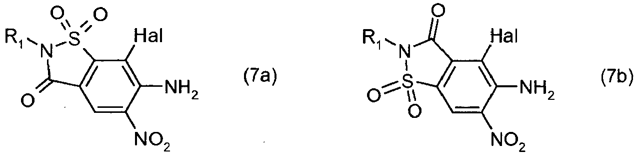

Another route for the synthesis of diazotizing compounds starts from 6-bromosaccharine (6-bromo-1,1-dioxo-1,2-benzothiazol-3-one) (8), which can be prepared according to Bioorg. Med. Chem. 13, 949-961 (2005).

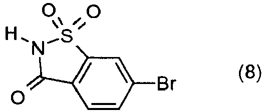

The alkylation of (8) can be done with alkylhalogenides or alkylsulfates and alkali carbonate in dimethylformamide at 100 °C, followed by nitration with nitrosulfuric acid in sulphuric acid. Afterwards, the bromo/nitro compounds are reduced, for example, with tin or iron in hydrochloric acid to form the diazotizing compounds (9), wherein R₁ is as described above.

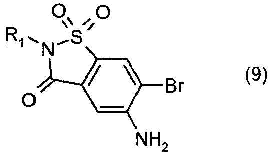

The diazotization of the compounds of formula (3a) and (3b), 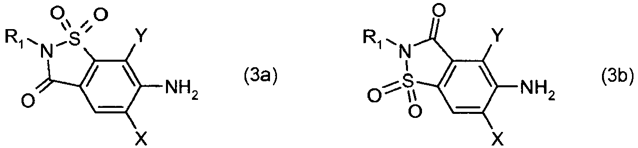 wherein R₁, X and Y are as defined above,
can be carried out in a manner known perse, for example with sodium nitrite in an aqueous acidic medium, for example an aqueous hydrochloric acid medium or aqueous sulfuric acid medium. The diazotization can, however, also be carried out using other diazotizing agents, for example nitrosylsulfuric acid. An additional acid may be present in the reaction medium in the diazotization procedure, e.g. phosphoric acid, sulfuric acid, acetic acid, propionic acid, hydrochloric acid or a mixture of such acids, for example a mixture of propionic acid and
acetic acid. The diazotization is advantageously carried out at temperatures from -10 to +30°C, e.g. from 0°C to room temperature.

The mono- or dicyano azo compounds can be prepared according to the method described in W02004044058 by a bromo/cyan exchange of the mono- or dibromo azo compounds ((1a) or (1 b) with X = Br; Y = H, Br) by reaction with sodium- or copper cyanide in dimethyl sulfoxide.

The dyes according to the invention may be used for dyeing or printing semi-synthetic and especially synthetic hydrophobic fibre materials, more especially textile materials. Textile materials composed of blend fabrics that comprise such semi-synthetic or synthetic hydrophobic fibre materials can also be dyed or printed using the dyes according to the invention.

Semi-synthetic fibre materials that come into consideration are, especially, cellulose 2½-acetate and cellulose triacetate.

Synthetic hydrophobic fibre materials consist especially of linear, aromatic polyesters, for example those of terephthalic acid and glycols, especially ethylene glycol, or condensation products of terephthalic acid and 1,4-bis(hydroxymethyl)cyclohexane; of polycarbonates, e.g. those of α,α-dimethyl-4,4-dihydroxy-diphenylmethane and phosgene, and of fibres based on polyvinyl chloride or on polyamide.

The application of the dyes according to the invention to the fibre materials is effected in accordance with known dyeing methods. For example, polyester fibre materials are dyed in the exhaust process from an aqueous dispersion in the presence of customary anionic or non-ionic dispersants and, optionally, customary swelling agents (carriers) at temperatures of from 80 to 140°C. Cellulose 2½-acetate is dyed preferably at from 65 to 85°C and cellulose triacetate at temperatures of from 65 to 115°C.

The dyes according to the invention will not colour wool and cotton present at the same time in the dyebath or will colour such materials only slightly (very good reservation) so that they can also be used satisfactorily in the dyeing of polyester/wool and polyester/cellulosic fibre blend fabrics.

The dyes according to the invention are suitable for dyeing in accordance with the thermosol process, in the exhaust process and for printing processes.

In such processes, the said fibre materials can be in a variety of processing forms, e.g. in the form of fibres, yarns or nonwoven, woven or knitted fabrics.

It is advantageous to convert the dyes according to the invention into a dye preparation prior to use. For this purpose, the dye is ground so that its particle size is on average from 0.1 to 10 microns. Grinding can be carried out in the presence of dispersants. For example, the dried dye is ground together with a dispersant or kneaded into a paste form together with a dispersant and then dried *in vacuo* or by atomisation. After adding water, the resulting preparations can be used to prepare printing pastes and dyebaths.

For printing, the customary thickeners will be used, e.g. modified or unmodified natural products, for example alginates, British gum, gum arabic, crystal gum, locust bean flour, tragacanth, carboxymethyl cellulose, hydroxyethyl cellulose, starch or synthetic products, for example polyacrylamides, polyacrylic acid or copolymers thereof, or polyvinyl alcohols.

The dyes according to the invention impart to the said materials, especially to polyester materials, level colour shades having very good in-use fastness properties such as, especially, good fastness to light, fastness to heat setting, fastness to pleating, fastness to chlorine, and wet fastness, e.g. fastness to water, to perspiration and to washing; the finished dyeings are further characterised by very good fastness to rubbing. Special emphasis should be given to the good fastness properties of the dyeings obtained with respect to perspiration and, especially, to washing.

The dyes according to the invention can also be used satisfactorily in producing mixed shades together with other dyes.

Furthermore, the dyes and dye mixtures according to the invention are also well suited to dyeing hydrophobic fibre materials from supercritical CO₂.

The present invention relates to the above-mentioned use of the dyes according to the invention as well as to a process for the dyeing or printing of semi-synthetic or synthetic hydrophobic fibre materials, especially textile materials, in which process a dye according to the invention is applied to the said materials or incorporated into them. The said hydrophobic fibre materials are preferably textile polyester materials. Further substrates that can be treated by the process according to the invention and preferred process conditions can be found hereinbefore in the more detailed description of the use of the dyes according to the invention.

The invention relates also to hydrophobic fibre materials, preferably polyester textile materials, dyed or printed by the said process.

The dyes according to the invention are, in addition, suitable for modern reproduction processes, e.g. thermotransfer printing.

The Examples that follow serve to illustrate the invention. Parts therein are parts by weight and percentages are percentages by weight, unless otherwise indicated. Temperatures are given in degrees Celsius. The relationship between parts by weight and parts by volume is the same as between grams and cubic centimetres.

### I. Preparation Examples

### I.1 Synthesis of Precursors:

### I.1.1 Synthesis of diazotizing component (10)

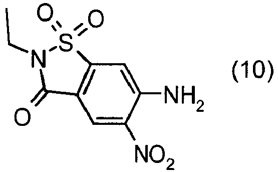

The first step of the synthesis of (10), the preparation of 6-nitrosaccharin (6-nitro-1,1-dioxo-1,2-benzothiazol-3-one), is done according to J. Macromol. Sci., A3(5), pp. 941 - 958 (1969).

In the second step, 6-nitrosaccharin is alkylated according to the following procedure: 180 g of 6-nitrosaccharin are placed in 500 ml dimethylformamide. Then 40 g of sodium carbonate and 120 g of ethyl bromide are added. The resulting solution is heated at 80 °C for two days. After cooling down, the mixture is pulled in 3 l of water and stirred for additional 30 minutes. The reaction mixture is filtered off and the filter cake is dried in vacuum.

Yield: 100g N-ethyl-6-nitro-1,1-dioxo-1,2-benzothiazol-3-one (11). 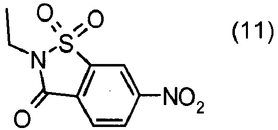 20 g of N-ethyl-6-nitrosaccharin (11) are placed in 90 ml hydrochloric acid (32 %) and 60 ml acetone. 23 g of tin granulate are added and the suspension so obtained is heated at 60 to 70 °C for 2.5 h. After cooling down to 2 °C, sodium carbonate is added till complete precipitation of the product. The reaction mixture is filtered off and the filter cake is washed twice with water and with sodium bicarbonate solution and then dried in vacuum.
Yield: 18 g N-Ethyl-6-amino-1,1-dioxo-1,2-benzothiazol-3-one (12).

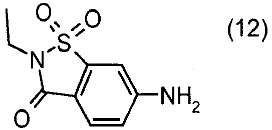

The nitration of N-ethyl-6-aminosaccharin (12) in 5-position requires protection of the amino group:
45.6 g of N-ethyl-6-aminosaccharin (12) and 18.5 g of pyridine are added to 120 ml dimethylformamide (DMF). The reaction mixture is cooled to -12 °C. Then ethyl chloroformiate is added dropwise. After stirring for 2.5 h, the reaction mixture it is poured on 500 g of ice and water. Water is added up to an overall volume of 1500 ml. The resulting mixture is stirred at 60 °C, cooled down and filtered off. The filter cake is washed with 1 l of water and dried in vacuum.
Yield: 52.8 g of N-ethyl-(6-methoxycarbonylamino)saccharin (13). 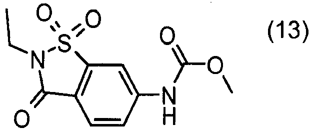 Nitration of compound (13):
52.8 g of the protected amine (13) is brought into 250 g of sulphuric acid. After cooling down to 1 °C, 30 g of nitrosulfuric acid (47 % HNO₃) are added dropwise. The mixture is stirred at 0 to 5 °C for 15 min. After warming up to room temperature, the mixture is stirred at this temperature for another 2 h and is then poured into 1500 ml of ice and water. The yellow crystals obtained after filtration are washed neutral with water and dried in vacuum. Yield: 55.6 g of N-ethyl-5-nitro-(6-methoxycarbonylamino)saccharin (14). 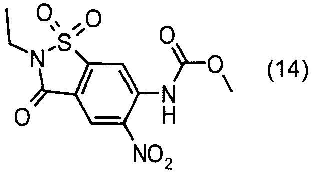
10 g of the protected amino-nitro compound (14) is given into 30 ml sulphuric acid (97 %). The mixture is heated at 100 °C for 2.25 h, cooled down, poured on 300 ml water and
filtered off. The filter cake is washed neutral and dried in vacuum.
Yield: 6.2 g of N-ethyl-5-nitro-6-aminosaccharin (10). 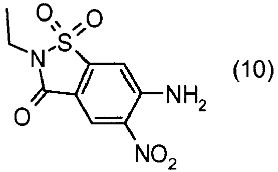 18 g of N-ethyl-5-nitro-6-aminosaccharin (10) and 8.2 g of sodium acetate are given into 200 g of acetic acid. A solution of 16.1 g bromine in 100 g acetic acid is added dropwise at room temperature. After stirring for additional 30 minutes, 300g of water and 100 g of ice are added. The solid is filtered off, washed with 300 g of water and dried in vacuum. Yield: 24 g of N-ethyl-5-nitro-6-amino-7-bromosaccharin (15)

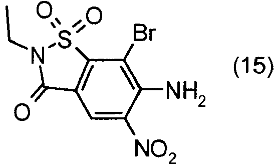

### I.1.2 Synthesis of diazotizing component (16)

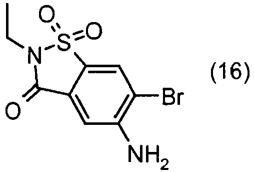

The first step of the synthesis of (16), the preparation of 6-bromo saccharin (6-bromo-1,1-dioxo-1,2-benzothiazol-3-one) (17) is done according to Bioorg. Med. Chem. 13 (2005), 949-961.

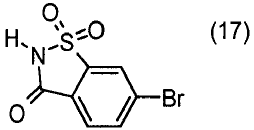

In the second step, 6-bromo saccharin is alkylated according to the following procedure: 60.5 g of 6-bromosaccharin (17) are brought into 260 ml of dimethylformamide. After the addition of 74.8 g of bromoethane, 32.0 g of potassium carbonate and 2.6 g of sodium iodide, the mixture is heated to 100 °C for one hour. After cooling down to room temperature, the mixture is given into 1.5 l of water. Thereafter the reaction flask is washed twice with 100 ml water. The combined aqueous mixtures are filtered off and the filtered solid is given into 730 ml of water. After stirring for half an hour, it is filtered again. The compound is dried in vacuum.
Yield: 54 g of N-ethyl-6-bromosaccharin (18) 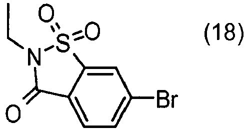 Nitration of N-ethyl-6-bromosaccharin:
30.4 g of N-ethyl-6-bromosaccharin (18) are brought into 120 g oleum (20 %). 40 g of nitrosulfuric acid are added dropwise, so that the temperature of the mixture does not exceed 55 °C. Then the reaction mixture is stirred for 4.5 h at 70 °C. After adding 7.2 g of nitrosulfuric acid, the mixture is stirred at 80 °C for 24 h. After cooling down to room temperature, the reaction mixture is given dropwise to 300 g ice, 300 g water and 32 g sulfamic acid. The temperature is kept between 0 and 10 °C with an ice bath and by adding 300 g of additional ice. After filtration the product is washed neutral and dried in vacuum. Yield: 28.3 g of N-ethyl-6-bromo-5-nitrosaccharin (19) 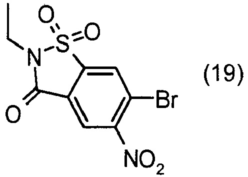 20 g of N-ethyl-6-bromo-5-nitrosaccharin (19) are given into 72 g of hydrochloric acid. Subsequently, 40 ml of methanol and 13 g of tin granulate are added. The temperature is raised to 75 °C within two hours and the mixture is stirred for 8 h at this temperature, cooled down to room temperature and filtered off. The filter residue is solved in 200 ml of dimethylformamide and precipitated with 200 ml water. The product is again filtered off and dried in vacuum.
   Yield: 10 g of N-ethyl-6-bromo-5-aminoosaccharin (16)

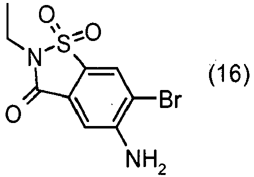

### I.2 Synthesis of Dyes

### I.2.1 Dyestuff of formula (100)

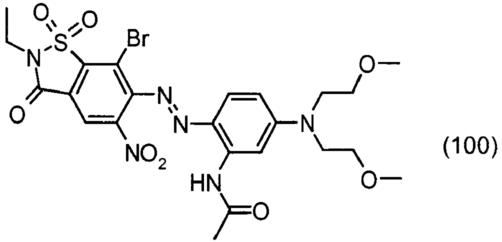

5.8 g of N-ethyl-5-nitro-6-amino-7-bromosaccharin (15) is given into a mixture of 5 g ice and 25 g of sulfuric acid (97 %). 5.1 g of nitrosylsulfuric acid (40% in sulfuric acid) are added dropwise so that the temperature does not exceed 4 °C. The mixture is stirred at 4 -10 °C for 6 h; afterwards 15 g of sulfuric acid (100 %) are added to solve the diazonium salt completely. Then the solution of the diazonium salt is added dropwise to a mixture of 31 g of water, 2.8 g of sulfuric acid (97 %), 9.5 g of acetic acid and 4.1 g of 3-[di-(2-methoxyethyl)amino]-acetanilide at 10 °C. 150 g of water are added after stirring at room temperature over night. The mixture is filtered and the filter cake is washed neutral and dried in vacuum.
Yield: 6 g ¹H-NMR (DMSO-d₆, 250 MHz): δ = 8.55 (s, 1 H, aromat. H), 7.98 (s, 1 H, aromat. H), 7.63, 6.86 (AB, 2H, aromat. H), 3.82 (m, 2H, NCH₂), 3.76 (m, 2H, CH₂), 3.60 (m, 2H, CH₂), 3.29 (s, 3H, OCH₃), 2.21 (s, 3H, CH₃), 1.35 (t, 3H, CH₃).

### I.2.2 Dyestuff of formula (151)

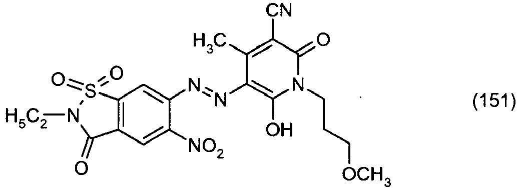

5.0 g of N-ethyl-5-nitro-6-aminosaccharin (10) are given to a mixture of 6 g of ice and 26 g of sulphuric acid (97 %). Subsequently, 5.4 g of nitrosylsulfuric acid (40% in sulfuric acid) are added dropwise at -1 °C and the mixture is stirred at 0 to 5 °C for 40 min.
Then the solution is added dropwise to a mixture of 35 g of water, 3.1 g of sulfuric acid (96 %), and 3.5 g of 1-(3-methoxypropyl)-6-hydroxy-4-methyl-2-oxo-1,2-dihydro-pyridine-3-carbonitrile at -3 to 3 °C during 3 h. After the addition is complete, the mixture is filtered and the filter cake is washed neutral. The compound is dried in vacuum.
Yield: 5 g
¹H-NMR (CDCl₆, 250 MHz): δ = 8.95 (s, 1H, aromat. H), 8.55 (s, 1H, aromat. H), 4.15 (m, 2H, NCH₂), 3.91 (m, 2H, NCH₂), 3.48 (m, 2H, CH₂), 3.28 (s, 3H, OCH₃), 2.78 (s, 3H, CH₃), 1.93 (m, 2H, CH₂), 1.48 (t, 3H, CH₃).

### I.2.3 Dyestuff of formula (163)

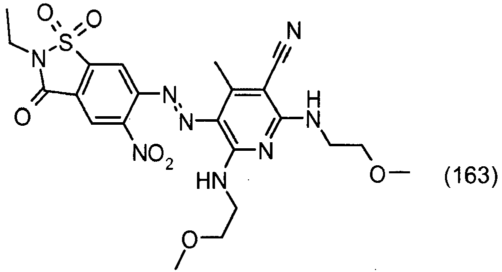

4.0 g of N-ethyl-5-nitro-6-aminosaccharin (10) are given to a mixture of 5 g of ice and 25 g of sulphuric acid (97 %). 5.4 g of nitrosylsulfuric acid (40% in sulfuric acid) are added dropwise at 0 °C and the mixture is stirred at 0 °C for 20 min.
Then the solution of the diazonium salt is added dropwise to a mixture of 28 g of water, 2.5 g of sulfuric acid (96 %) and 3.6 g of 2,6-bis-(2-methoxyethylamino)-4-methylnicotinonitrile at -2 to 0 °C during 3 h. After the addition is complete, the mixture is warmed to room temperature within 3.5 h. Subsequently, it is filtered and the filter cake is washed neutral and dried in vacuum.
Yield: 3 g.
¹H-NMR (CDCl₆, 250 MHz): δ = 8.44 (s, 1H, aromat. H), 8.35 (s, 1H, aromat. H), 6.27 (t, 1H, NH), 3.87 (m, 4H, NCH₂), 3.77 (m, 2H, CH₂), 3.68 (m, 2H, CH₂), 3.60 (m, 2H, CH₂), 3.41 (s, 6H, OCH₃), 2.75 (s, 3H, CH₃), 1.47 (t, 3H, CH₃).

### I.2.4 Dyestuff of formula (184)

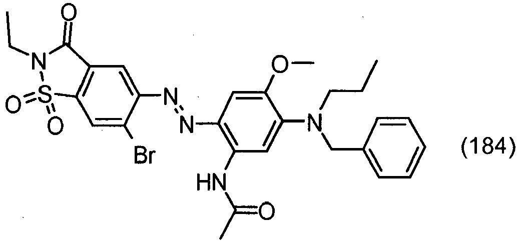

3.5 g of N-ethyl-6-bromo-5-aminoosaccharin (16) is given into a mixture of 15.9 g of sulfuric acid (96 %) and 0.66 g of acetic acid. 4.0 g of nitrosylsulfuric acid (40% in sulfuric acid) are added dropwise at 2 °C during 15 minutes and the mixture is stirred at 2 °C for three hours. Subsequently, the solution of the diazonium salt is added dropwise to a mixture of 25 g of water, 28.9 g acetic acid, 1.6 g of sulfamic acid and 4.1 g of 3-(N-benzyl-N-propylamino)-4-methoxyacetanilide at 3 to 6 °C (addition of ice) and a pH-value of 1.45 to 1.6 (addition of sodium hydroxide solution 30 %). After stirring at pH = 2 for one hour, the mixture is filtered and the filter cake is washed neutral. The product is dried in vacuum and is used for the synthesis of compound 193 without further cleaning.
Yield: 5 g.

### I.2.5 Dyestuff of formula (203)

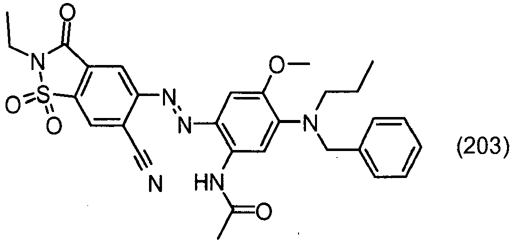

3.6 g of compound (184) is given to a mixture of 31 ml pyridine and 1.5 g acetic anhydride. 0.55 g of copper(I)cyanide are added and the mixture is heated to 70 °C for 4.5 h. After cooling down to 4 °C, 50 g of water is added. The mixture is filtered and washed with 25 ml of water and 25 ml of methanol. The product is dried in vacuum.
Yield: 2.7 g
¹H-NMR (CDCl₃, 250 MHz): δ = 8.42 (s, 1 H, aromat. H), 8.37 (s, 1H, aromat. H), 8.17 (s, 1 H, aromat. H), 7.35 - 7.28 (m, 6H, aromat. H), 2.21 (s, 2H, CH₂), 3.86 (m, 2H, NCH₂), 3.82 (s, 3H, OCH₃), 3.48 (t, 2H, CH₂), 2.33 (s, 3H, CH₃), 1.80 (m, 2H, CH₂), 1.47 (t, 3H, CH₃), 0.96 (t, 3H, CH₃).

The dyes of formulae (100) - (216) listed in the following Tables 1 - 6 can be prepared according to the methods described above.

**Table 1: Dyestuffs of formula (1aa)**

| | | | | | | | | |
|---|---|---|---|---|---|---|---|---|
| 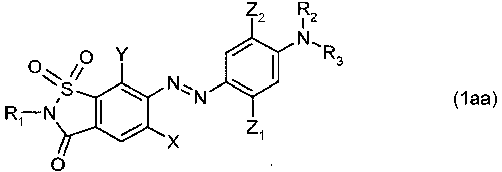 | | | | | | | | |

| Dye | R₁ | X | Y | Z₁ | Z₂ | R₂ | R₃ | λₘₐₓ/nm |
|---|---|---|---|---|---|---|---|---|
| 100 | C₂H₅ | NO₂ | Br | HNCOCH₃ | H | CH₂CH₂OCH₃ | CH₂CH₂OCH₃ | 558 |
| 101 | C₂H₅ | NO₂ | H | HNCOCH₃ | H | CH₂CH₂OCH₃ | CH₂CH₂OCH₃ | 548 |
| 102 | C₂H₅ | NO₂ | H | HNCOCH₃ | H | C₂H₅ | CH₂C₆H₅ | 546 |
| 103 | C₂H₅ | NO₂ | H | CH₃ | H | CH₂CH₂CN | CH₂CH₂CN | 531 |
| 104 | C₂H₅ | NO₂ | Br | HNCOCH₃ | H | C₂H₅ | C₂H₅ | 564 |
| 105 | C₂H₅ | NO₂ | CN | HNCOCH₃ | H | CH₂CH₂OCH₃ | CH₂CH₂OCH₃ | 598 |
| 106 | C₂H₅ | NO₂ | H | HNCOCH₃ | OCH₃ | CH₂COOCH₃ | CH₂COOCH₃ | 576 |
| 107 | C₂H₅ | NO₂ | H | HNCOCH₃ | OCH₃ | CH₂CH₂OCH₃ | CH₂CH₂OCH₃ | 582 |
| 108 | C₂H₅ | NO₂ | H | HNCOCH₃ | OCH₃ | CH₂CH₂OCH₃ | CH₂CH₂OCH₃ | 596 |
| 109 | C₂H₅ | NO₂ | H | HNCOCH₃ | OCH₃ | CH₂CH=CH₂ | CH₂CH=CH₂ | 582 |
| 110 | C₂H₅ | NO₂ | H | HNCOCH₃ | H | C₂H₅ | C₂H₅ | 554 |
| 111 | C₂H₅ | NO₂ | H | HNCOCH₃ | OCH₃ | C₂H₅ | CH₂C₆H₅ | 588 |
| 112 | C₂H₅ | NO₂ | H | CH₃ | H | C₂H₅ | CH₂C₆H₅ | 546 |
| 113 | C₂H₅ | NO₂ | Br | CH₃ | H | C₃H₇ | C₃H₇ | 577 |
| 114 | C₂H₅ | NO₂ | Br | H | H | CH₂CH₂CN | CH₂CH₂OOCCH₃ | 556 |
| 115 | C₂H₅ | NO₂ | Br | CH₃ | H | CH₂CH₂CN | CH₂CH₂CN | 571 |
| 116 | C₂H₅ | Br | Br | HNCOCH₃ | OCH₃ | CH₂CH=CH₂ | CH₂CH=CH₂ | 506 |
| 117 | C₂H₅ | Br | Br | HNCOCH₃ | H | CH₂CH₂OCH₃ | CH₂CH₂OCH₃ | 478 |
| 118 | C₂H₅ | Br | Br | HNCOCH₃ | OCH₃ | C₂H₅ | CH₂C₆H₅ | 504 |
| 119 | C₂H₅ | CN | CN | HNCOCH₃ | OCH₃ | CH₂CH=CH₂ | CH₂CH=CH₂ | 636 |
| 120 | C₂H₅ | CN | CN | HNCOCH₃ | H | CH₂CH₂OCH₃ | CH₂CH₂OCH₃ | 618 |
| 121 | C₂H₅ | CN | CN | HNCOCH₃ | OCH₃ | C₂H₅ | CH₂C₆H₅ | 638 |
| 122 | C₂H₅ | Br | Br | HNCOCH₃ | OCH₃ | C₂H₅ | C₂H₅ | 534 |
| 123 | C₂H₅ | Br | Br | HNCOCH₃ | OCH₃ | C₃H₇ | CH₂C₆H₅ | 512 |
| 124 | C₂H₅ | Br | Br | HNCOCH₃ | OCH₃ | CH₂CH₂OCH₃ | CH₂CH₂OCH₃ | 502 |
| 125 | C₂H₅ | CN | CN | HNCOCH₃ | OCH₃ | C₂H₅ | C₂H₅ | 636 |
| 126 | C₂H₅ | CN | CN | HNCOCH₃ | OCH₃ | C₃H₇ | CH₂C₆H₅ | 638 |
| 127 | C₂H₅ | CN | CN | HNCOCH₃ | OCH₃ | CH₂CH₂OCH₃ | CH₂CH₂OCH₃ | 638 |
| 128 | C₃H₇ | NO₂ | H | HNCOCH₃ | OCH₃ | C₂H₅ | CH₂C₆H₅ | 584 |
| 129 | C₃H₇ | NO₂ | H | HNCOCH₃ | OCH₃ | C₃H₇ | CH₂C₆H₅ | 588 |
| 130 | C₃H₇ | NO₂ | H | HNCOCH₃ | OCH₃ | CH₂CH₂OCH₃ | CH₂CH₂OCH₃ | 584 |
| 131 | C₃H₇ | NO₂ | H | HNCOCH₃ | OCH₃ | CH₂CH=CH₂ | CH₂CH=CH₂ | 582 |
| 132 | C₃H₇ | NO₂ | H | HNCOCH₃ | OCH₃ | C₂H₅ | C₂H₅ | 598 |
| 133 | C₃H₇ | NO₂ | H | HNCOCH₃ | OCH₃ | CH₂COOCH₃ | CH₂COOCH₃ | 577 |
| 134 | C₃H₇ | NO₂ | H | HNCOCH₃ | H | CH₂COOCH₃ | CH₂COOCH₃ | 546 |
| 135 | C₂H₅ | Br | Br | HNCOCH₃ | H | CH₂COOCH₃ | CH₂COOCH₃ | 442 |
| 136 | C₂H₅ | Br | Br | HNCOCH₃ | OCH₃ | CH₂COOCH₃ | CH₂COOCH₃ | 487 |
| 137 | C₂H₅ | CN | CN | HNCOCH₃ | H | CH₂COOCH₃ | CH₂COOCH₃ | 558 |
| 138 | C₂H₅ | CN | CN | HNCOCH₃ | OCH₃ | CH₂COOCH₃ | CH₂COOCH₃ | 592 |
| 139 | C₂H₅ | NO₂ | Cl | HNCOCH₃ | OCH₃ | CH₂CH=CH₂ | CH₂CH=CH₂ | 604 |
| 140 | C₂H₅ | NO₂ | Cl | HNCOCH₃ | H | C₂H₅ | C₂H₅ | 568 |
| 141 | C₂H₅ | NO₂ | Cl | HNCOCH₃ | H | C₃H₇ | C₃H₇ | 570 |
| 142 | C₂H₅ | NO₂ | Cl | HNCOCH₃ | H | C₂H₅ | CH₂C₆H₅ | 556 |
| 143 | C₂H₅ | NO₂ | Cl | HNCOCH₃ | H | CH₂CH₂OCH₃ | CH₂CH₂OCH₃ | 558 |
| 144 | CH₃ | NO₂ | H | HNCOCH₃ | OCH₃ | CH₂CH₂OCH₃ | CH₂CH₂OCH₃ | 600 |
| 145 | CH₃ | NO₂ | H | HNCOCH₃ | OCH₃ | CH₂CH=CH₂ | CH₂CH=CH₂ | 586 |
| 146 | CH₃ | NO₂ | H | HNCOCH₃ | OCH₃ | C₂H₅ | CH₂C₆H₅ | 588 |
| 147 | CH₃ | NO₂ | H | HNCOCH₃ | OCH₃ | C₃H₇ | CH₂C₆H₅ | 590 |
| 148 | CH₃ | NO₂ | H | HNCOCH₃ | OCH₃ | CH₂CH₂OCH₃ | CH₂CH₂OCH₃ | 584 |
| 149 | CH₃ | NO₂ | H | HNCOCH₃ | OCH₃ | CH₂COOCH₃ | CH₂COOCH₃ | XXX |

**Table 2: Dyestuffs of formula (1ab)**

| | | | | | |
|---|---|---|---|---|---|
| 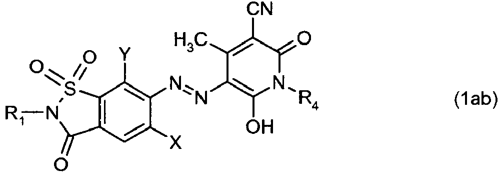 | | | | | |

| Dye | R₁ | X | Y | R₄ | λₘₐₓ/nm |
|---|---|---|---|---|---|
| 150 | C₂H₅ | NO₂ | H | C₂H₅ | 435 |
| 151 | C₂H₅ | NO₂ | H | CH₂CH₂CH₂OCH₃ | 438 |
| 152 | C₂H₅ | Br | Br | C₂H₅ | 408 |
| 153 | C₂H₅ | Br | Br | CH₂CH₂CH₂OCH₃ | 411 |
| 154 | C₂H₅ | Br | H | C₂H₅ | 436 |
| 155 | C₂H₅ | Br | H | CH₂CH₂CH₂OCH₃ | 438 |
| 156 | C₃H₇ | NO₂ | H | C₂H₅ | 436 |
| 157 | C₃H₇ | NO₂ | H | CH₂CH₂CH₂OCH₃ | 439 |
| 158 | C₃H₇ | Br | Br | C₂H₅ | 408 |
| 159 | C₃H₇ | Br | Br | CH₂CH₂CH₂OCH₃ | 412 |
| 160 | C₃H₇ | Br | H | C₂H₅ | 437 |
| 161 | C₃H₇ | Br | H | CH₂CH₂CH₂OCH₃ | 440 |

**Table 3: Dyestuffs of formula (1ac)**

| | | | | | | |
|---|---|---|---|---|---|---|
| 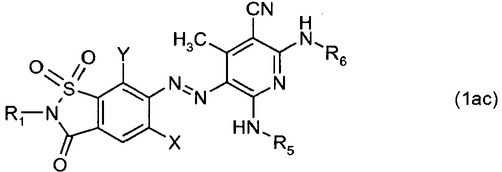 | | | | | | |

| Dye | R₁ | X | Y | R₅ | R₆ | λₘₐₓ/nm |
|---|---|---|---|---|---|---|
| 162 | CH₃ | NO₂ | H | CH₂CH₂CH₂OCH₃ | CH₂CH₂CH₂OCH₃ | 514 |
| 163 | C₂H₅ | NO₂ | H | CH₂CH₂OCH₃ | CH₂CH₂OCH₃ | 510 |
| 164 | C₂H₅ | NO₂ | H | CH₂C₆H₅ | C₆H₅ | 495 |
| 165 | C₂H₅ | NO₂ | H | CH₂CH₂CH₂OCH₃ | CH₂CH₂CH₂OCH₃ | 514 |
| 166 | C₂H₅ | NO₂ | H | H | CH₂CH₂CH₂OCH₂CH₂OCH₃ | 502 |
| 167 | CH₃ | Br | H | CH₂CH₂CH₂OCH₃ | CH₂CH₂CH₂OCH₃ | 492 |
| 168 | C₂H₅ | Br | H | CH₂CH₂OCH₃ | CH₂CH₂OCH₃ | 488 |
| 169 | C₂H₅ | Br | H | CH₂C₆H₅ | C₆H₅ | 475 |
| 170 | C₂H₅ | NO₂ | H | CH₂CH₂OCH₃ | CH₂CH₂CH₂OCH₂CH₂OCH₃ | 512 |

**Table 4: Dyestuffs of formula (1ad)**

| | | | | | | | |
|---|---|---|---|---|---|---|---|
| 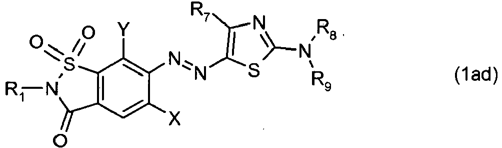 | | | | | | | |

| Dye | R₁ | X | Y | R₇ | R₈ | R₉ | λₘₐₓ/nm |
|---|---|---|---|---|---|---|---|
| 171 | C₂H₅ | NO₂ | Cl | C₆H₅ | C₂H₅ | C₂H₅ | 516 |
| 172 | C₂H₅ | NO₂ | Br | C₆H₅ | C₂H₅ | C₂H₅ | 514 |
| 173 | C₂H₅ | NO₂ | Cl | C₆H₅ | C₂H₅ | C₂H₅ | 516 |
| 174 | C₂H₅ | CN | H | C₆H₅ | C₂H₅ | C₂H₅ | 505 |
| 175 | CH₃ | NO₂ | Cl | C₆H₅ | C₂H₅ | C₂H₅ | 520 |
| 176 | CH₃ | NO₂ | Br | C₆H₅ | C₂H₅ | C₂H₅ | 519 |
| 177 | CH₃ | NO₂ | Cl | C₆H₅ | C₂H₅ | C₂H₅ | 517 |
| 178 | CH₃ | CN | H | C₆H₅ | C₂H₅ | C₂H₅ | 507 |

**Table 5: Dyestuffs of formula (1ba)**

| | | | | | | | | |
|---|---|---|---|---|---|---|---|---|
| 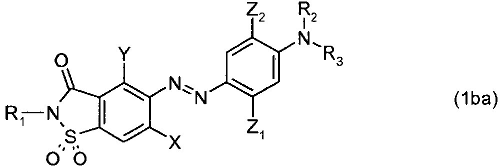 | | | | | | | | |

| Dye | R₁ | X | Y | Z₁ | Z₂ | R₂ | R₃ | λₘₐₓ/nm |
|---|---|---|---|---|---|---|---|---|
| 179 | C₂H₅ | Br | H | CH₃ | H | C₂H₅ | CH₂C₆H₅ | 475 |
| 180 | C₂H₅ | Br | H | CH₃ | H | CH₂CH₂OCH₃ | CH₂CH₂OCH₃ | 482 |
| 181 | C₂H₅ | Br | H | HNCOCH₃ | OCH₃ | C₂H₅ | C₂H₅ | 554 |
| 182 | C₂H₅ | Br | H | HNCOCH₃ | OCH₃ | CH₂CH=CH₂ | CH₂CH=CH₂ | 538 |
| 183 | C₂H₅ | Br | H | HNCOCH₃ | OCH₃ | C₂H₅ | CH₂C₆H₅ | 542 |
| 184 | C₂H₅ | Br | H | HNCOCH₃ | OCH₃ | C₃H₇ | CH₂C₆H₅ | 544 |
| 185 | C₂H₅ | Br | H | HNCOCH₃ | OCH₃ | CH₂CH₂OCH₃ | CH₂CH₂OCH₃ | 540 |
| 186 | C₂H₅ | Br | H | HNCOCH₃ | OCH₃ | CH₂COOCH₃ | CH₂COOCH₃ | 488 |
| 187 | C₃H₇ | NO ₂ | H | CH₃ | OCH₃ | C₃H₇ | C₃H₇ | 563 |
| 188 | C₃H₇ | NO ₂ | H | HNCOCH₃ | OCH₃ | CH₂CH=CH₂ | CH₂CH=CH₂ | 585 |
| 189 | C₃H₇ | NO ₂ | H | HNCOCH₃ | OCH₃ | CH₂CH₂OCH₃ | CH₂CH₂OCH₃ | 600 |
| 190 | C₃H₇ | NO ₂ | H | HNCOCH₃ | OCH₃ | CH₂COOCH₃ | CH₂COOCH₃ | 579 |
| 191 | C₃H₇ | NO ₂ | H | HNCOCH₃ | OCH₃ | C₃H₇ | CH₂C₆H₅ | 588 |
| 192 | C₃H₇ | NO ₂ | Br | HNCOCH₃ | OCH₃ | CH₂CH=CH₂ | CH₂CH=CH₂ | 607 |
| 193 | C₃H₇ | NO ₂ | Br | HNCOCH₃ | OCH₃ | CH₂COOCH₃ | CH₂COOCH₃ | 605 |
| 194 | C₄H₉ | NO ₂ | H | HNCOCH₃ | OCH₃ | CH₂CH₂OCH₃ | CH₂CH₂OCH₃ | 565 |
| 195 | C₄H₉ | NO ₂ | H | CH₃ | OCH₃ | C₃H₇ | C₃H₇ | 558 |
| 196 | C₂H₅ | CN | H | HNCOCH₃ | OCH₃ | C₂H₅ | C₂H₅ | 584 |
| 197 | C₂H₅ | CN | H | HNCOCH₃ | OCH₃ | CH₂CH=CH₂ | CH₂CH=CH₂ | 576 |
| 198 | C₂H₅ | CN | H | CH₃ | H | C₂H₅ | CH₂C₆H₅ | 520 |
| 199 | C₂H₅ | CN | H | HNCOCH₃ | OCH₃ | C₂H₅ | CH₂C₆H₅ | 580 |
| 200 | C₂H₅ | CN | H | CH₃ | H | CH₂CH₂OCH₃ | CH₂CH₂OCH₃ | 538 |
| 201 | C₂H₅ | CN | H | HNCOCH₃ | OCH₃ | CH₂COOCH₃ | CH₂COOCH₃ | 546 |
| 202 | C₂H₅ | CN | H | HNCOCH₃ | OCH₃ | CH₂CH₂OCH₃ | CH₂CH₂OCH₃ | 578 |
| 203 | C₂H₅ | CN | H | HNCOCH₃ | OCH₃ | C₃H₇ | CH₂C₆H₅ | 582 |
| 204 | C₂H₅ | CN | Br | HNCOCH₃ | OCH₃ | CH₂COOCH₃ | CH₂COOCH₃ | 576 |
| 205 | C₂H₅ | CN | Br | HNCOCH₃ | OCH₃ | CH₂CH₂OCH₃ | CH₂CH₂OCH₃ | 622 |
| 206 | C₂H₅ | CN | Br | HNCOCH₃ | H | CH₂CH₂OCH₃ | CH₂CH₂OCH₃ | 570 |

**Table 6: Dyestuffs of formula (1bc)**

| | | | | | | |
|---|---|---|---|---|---|---|
| 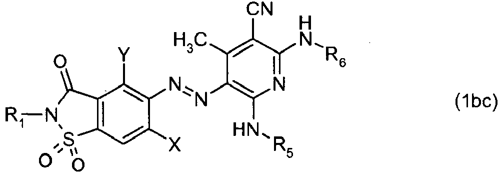 | | | | | | |

| Dye | R₁ | X | Y | R₅ | R₆ | λₘₐₓ/nm |
|---|---|---|---|---|---|---|
| 207 | C₂H₅ | Br | H | CH₂CH₂CH₂OCH₃ | CH₂CH₂CH₂OCH₃ | 486 |
| 208 | C₂H₅ | Br | H | CH₂CH₂OCH₃ | CH₂CH₂OCH₃ | 484 |
| 209 | C₂H₅ | CN | H | CH₂CH₂OCH₃ | CH₂CH₂OCH₃ | 502 |
| 210 | C₂H₅ | CN | H | CH₂CH₂CH₂OCH₃ | CH₂CH₂CH₂OCH₃ | 500 |
| 211 | CH₃ | NO₂ | H | CH₂CH₂CH₂OCH₃ | CH₂CH₂CH₂OCH₃ | 508 |
| 212 | C₂H₅ | NO₂ | H | CH₂CH₂OCH₃ | CH₂CH₂OCH₃ | 506 |
| 213 | C₂H₅ | NO₂ | H | CH₂C₆H₅ | C₆H₅ | 491 |
| 214 | C₂H₅ | NO₂ | H | H | CH₂CH₂CH₂OCH₂CH₂OCH₃ | 498 |
| 215 | C₂H₅ | Br | H | CH₂C₆H₅ | C₆H₅ | 468 |
| 216 | C₂H₅ | NO₂ | H | CH₂CH₂OCH₃ | CH₂CH₂CH₂OCH₂CH₂OCH₃ | 512 |

### II. Application Examples

### II.1: Dyeing of polyester

1 part by weight of the dye of formula (100) prepared in Example I.1 is milled together with four parts of a commercially available dispersing agent and 15 parts of water. Using that formulation, a 1% dyeing (based on the dye and the substrate) is produced on woven polyester by high temperature exhaust process at 130 °C.

Test results: the light fastness of the dyeing is excellent as well as the results in the AATCC 61 and ISO 105 tests. The build up properties of the dye are very good.

### II.2: Dyeing of polyester

Example II.1 is repeated by using the dyes of formulae (101) - (216) instead of the dye of formula (101). The build up properties of the dyes are very good and the dyeings exhibit good light fastness and very good results in the AATCC 61 and ISO 105 tests.

## Claims

1. An azo dye of formula 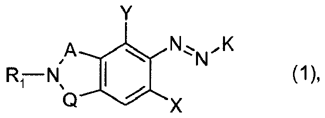 wherein either A is -CO- and Q is -SO₂- or A is -SO₂- and Q is -CO-,
R₁denotes C₁-C₆alkyl, benzyl, allyl, -CₙH₂ₙ-COOR or -CₙH₂ₙ-CN, wherein n is a number from 1 to 3 and R represents hydrogen or C₁-C₆alkyl,
X is nitro, cyano or halogen,
Y is hydrogen, nitro, cyano or halogen, and
K is the radical of a coupling component of the benzene, naphthalene, pyrazolone, 6-hydroxypyridone-(2) or acetoacetic acid arylamide series.

2. An azo dye of formula (1) according to claim 1, wherein K denotes a radical of formula (2a) - (2d) 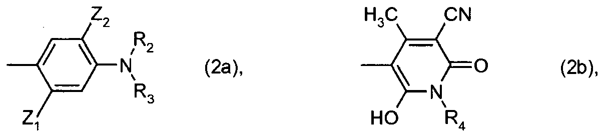 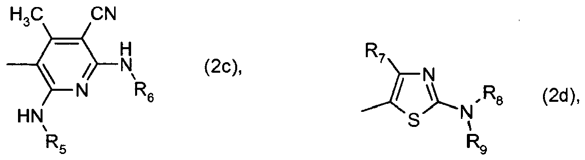 wherein Z₁is hydrogen, halogen, C₁-C₆alkyl, C₁-C₆alkoxy which is unsubstituted or substituted with one or more C₁-C₃alkylcarbonyloxy groups, benzyl, -NH-SO₂-R₁₀ or -NH-CO-R₁₁, with R₁₀ and R₁₁ being methyl or ethyl,
Z₂ is hydrogen, halogen or C₁-C₆alkoxy which is unsubstituted or substituted with one or more C₁-C₃alkylcarbonyloxy groups,
R₂ and R₃ are each independently of the other hydrogen, vinyl, allyl or C₁-C₆alkyl which is unsubstituted or substituted by hydroxy, cyano, C₁-C₆alkylcarbonyloxy, C₁-C₆alkyloxycarbonyl, C₁-C₆ alkoxy or C₆-C₂₄aryl,
R₄ is hydrogen, vinyl, allyl or C₁ - C₆ alkyl which is unsubsituted or substituted by cyano, carboxy, hydroxy, C₁-C₆alkoxy, C₂-C₈alkoxyalkoxy or C₆₋₂₄aryl,
R₅ and R₆ are each independently of the other hydrogen, vinyl, allyl or C₁-C₆ alkyl which is unsubsituted or substituted by cyano, carboxy, hydroxy, C₁-C₆alkoxy-, C₂-C₈alkoxyalkoxy- or C₆-C₂₄aryl,
R₇ is C₁-C₆alkyl, C₆-C₂₄aryl or benzyl. and
R₈ and R₉ are each independently of the other hydrogen, vinyl, allyl or C₁-C₆ alkyl which is unsubsituted or substituted by cyano-, carboxy, hydroxy, C₁-C₆alkoxy- or C₆-C₂₄aryl.

3. An azo dye of formula (1) according to claim 1 or 2, wherein Y is hydrogen or bromo.

4. An azo dye of formula (1) according to any one of claims 1 to 3, wherein R₁ is ethyl.

5. An azo dye of formula (1) according to claim 2, wherein K denotes a radical of formula (2a), wherein Z₁ is methyl or acetylamino, Z₂ represents hydrogen or methoxy and R₂ and R₃ are each independently of the other ethyl, n-propyl, allyl, 2-methoxyethyl, 2-cyanoethyl, benzyl, methoxycarbonylmethyl or methoxycarbonylethyl.

6. An azo dye of formula (1) according to claim 2, wherein K denotes a radical of formula (2b), wherein R₄ is ethyl or 3-methoxypropyl.

7. An azo dye of formula (1) according to claim 2, wherein K denotes a radical of formula (2c), wherein R₅ and R₆ are each independently of the other hydrogen, 2-methoxyethyl, 3-methoxypropyl, 3-(2-methoxyethoxy)propyl, phenyl or benzyl.

8. An azo dye of formula (1) according to claim 2, wherein K denotes a radical of formula (2d), wherein R₇ is phenyl and R₈ and R₉ denote ethyl.

9. An azo dye of formula (1) according to claim 2 of formula

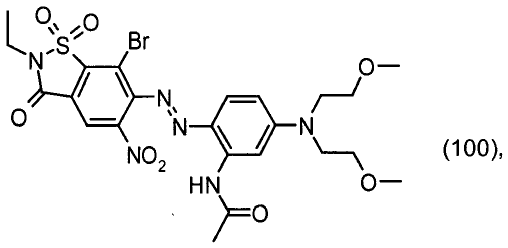

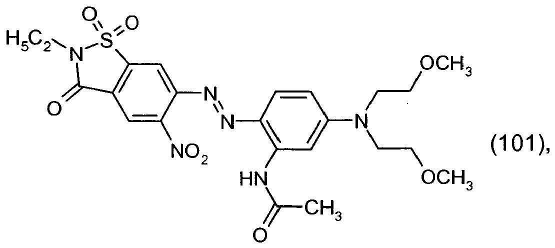

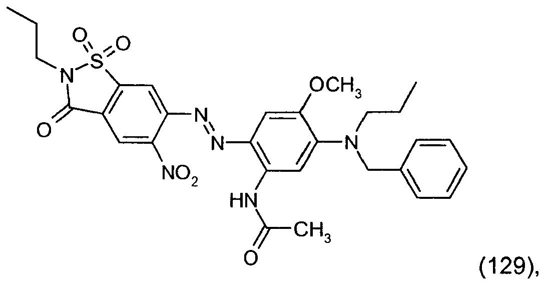

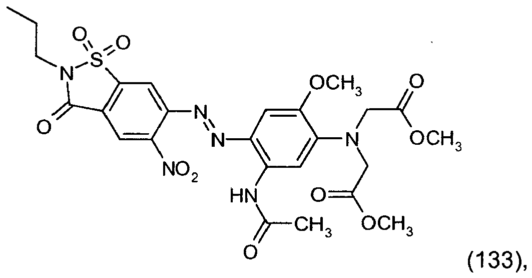

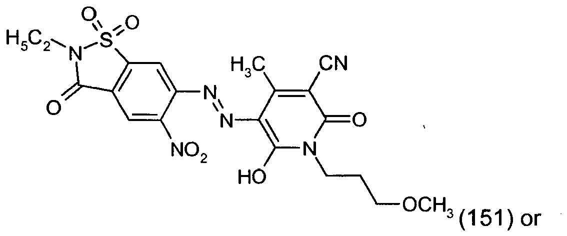

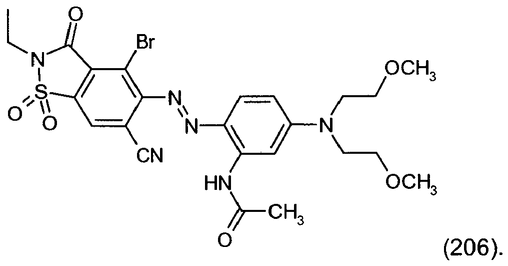

10. A process for the preparation of an azo dye of formula (1) according to claim 1, which comprises diazotizing a compound of formula (3) 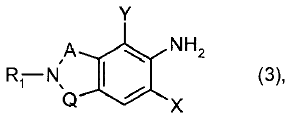 wherein R₁ and A, Q, X and Y are as defined in claim 1, according to a conventional method and then coupling the diazotized compound with a coupling component of formula K-H, wherein K is as defined in claim 1.

11. A process for dyeing or printing semi-synthetic or synthetic hydrophobic fibre materials, in which process a dye of formula (1) according to claim 1 is applied to the said materials or incorporated into them.

12. Use of a dye of formula (1) according to claim 1 in dyeing or printing semi-synthetic and especially synthetic hydrophobic fibre materials, more especially textile materials.

13. A semi-synthetic or especially synthetic hydrophobic fibre material, more especially a textile material, dyed or printed by the process according to claim 11.

## Patentansprüche

1. Azofarbstoff der Formel 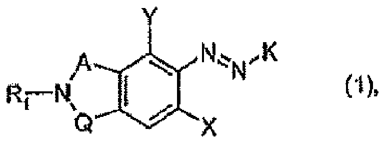 worin entweder A -CO- und Q -SO₂- ist oder A -SO₂- und Q -CO- ist,
R₁ C₁-C₆-Alkyl, Benzyl, Allyl, -CₙH₂ₙ-COOR oder -CₙH₂ₙ-CN, worin n eine Zahl von 1 bis 3 ist und R Wasserstoff oder C₁-C₆-Alkyl darstellt, bedeuted,
X Nitro, Cyano oder Halogen ist,
Y Wasserstoff, Nitro, Cyano oder Halogen ist und
K den Rest einer Kupplungskomponente der Benzol-, Naphthalen-, Pyrazolon-, 6-Hydroxypyridon-(2)- oder Acetoessigsäurearylamid-Reihen darstellt.

2. Azofarbstoff der Formel (1) nach Anspruch 1, worin K einen Rest der Formel (2a)-(2d) bedeutet 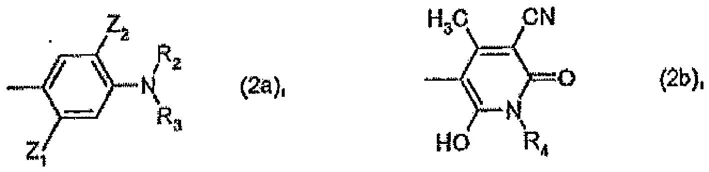 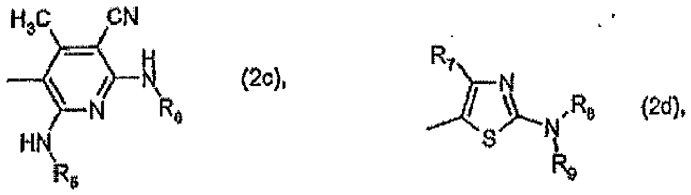 worin Z₁ Wasserstoff, Halogen, C₁-C₆-Alkyl, C₁-C₆-Alkoxy, welches unsubstituiert oder mit ein oder mehreren C₁-C₃-Alkylcarbonyloxygruppen substituiert ist, Benzyl, -NH-SO₂-R₁₀ oder -NH-CO-R₁₁ ist, wobei R₁₀ und R₁₁ Methyl oder Ethyl sind,
Z₂ Wasserstoff, Halogen oder C₁-C₆-Alkoxy ist, welches unsubstituiert oder mit ein oder mehreren C₁-C₃-Alkylcarbonyloxygruppen substituiert ist,
R₂ und R₃ jeweils unabhängig voneinander Wasserstoff, Vinyl, Allyl oder C₁-C₆-Alkyl sind, welches unsubstituiert oder mit Hydroxy, Cyano, C₁-C₆-Alkylcarbonyloxy, C₁-C₆-Alkyloxycarbonyl, C₁-C₆-Alkoxy oder C₆-C₂₄-Aryl substituiert ist,
R₄ Wasserstoff, Vinyl, Allyl oder C₁-C₆-Alkyl ist, welches unsubstituiert oder durch Cyano, Carboxy, Hydroxy, C₁-C₆-Alkoxy, C₂-C₈-Alkoxyalkoxy oder C₆-C₂₄-Aryl substituiert ist,
R₅ und R₆ jeweils unabhängig voneinander Wasserstoff, Vinyl, Allyl oder C₁-C₆-Alkyl sind, welches unsubstituiert oder durch Cyano, Carboxy, Hydroxy, C₁-C₆-Alkoxy, C₂-C₈-Alkoxyalkoxy oder C₆-C₂₄-Aryl substituiert ist,
R₇ C₁-C₆-Alkyl, C₆-C₂₄-Aryl oder Benzyl ist und
R₈ und R₉ jeweils unabhängig voneinander Wasserstoff, Vinyl, Allyl oder C₁-C₆-Alkyl sind, welches unsubstituiert oder durch Cyano, Carboxy, Hydroxy, C₁-C₆-Alkoxy oder C₆-C₂₄-Aryl substituiert ist.

3. Azofarbstoff der Formel (1) nach Anspruch 1 oder Anspruch 2, worin Y Wasserstoff oder Brom ist.

4. Azofarbstoff der Formel (1) nach einem der Ansprüche 1 bis 3, worin R₁ Ethyl ist.

5. Azofarbstoff der Formel (1) nach Anspruch 2, worin K einen Rest der Formel (2a) bedeutet, worin Z₁ Methyl oder Acetylamino ist, Z₂ Wasserstoff oder Methoxy repräsentiert und R₂ und R₃ jeweils unabhängig voneinander Ethyl, N-Propyl, Allyl, 2-Methoxyethyl, 2-Cyanoethyl, Benzyl, Methoxycarbonylmethyl oder Methoxycar-bonylethyl sind.

6. Azofarbstoff der Formel (1) nach Anspruch 2, worin K einen Rest der Formel (2b) bedeutet, worin R₄ Ethyl oder 3-Methoxypropyl ist.

7. Azofarbstoff der Formel (1) nach Anspruch 2, worin K einen Rest der Formel (2c) bedeutet, worin R₅ und R₆ jeweils unabhängig voneinander Wasserstoff, 2-Methoxyethyl, 3-Methoxypropyl, 3-(2-Methoxyethoxy)propyl, Phenyl oder Benzyl sind.

8. Azofarbstoff der Formel (1) nach Anspruch 2, worin K einen Rest der Formel (2d) bedeutet, worin R₇ Phenyl ist und R₈ und R₉ Ethyl bedeuten.

9. Azofarbstoff der Formel (1) nach Anspruch 2 der Formeln 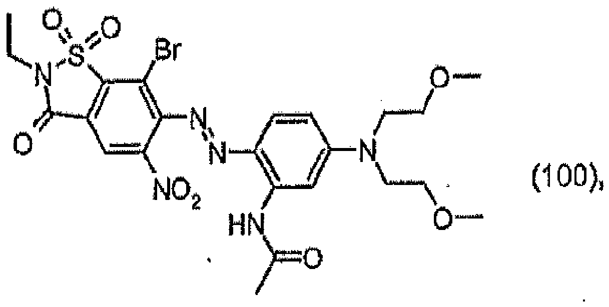 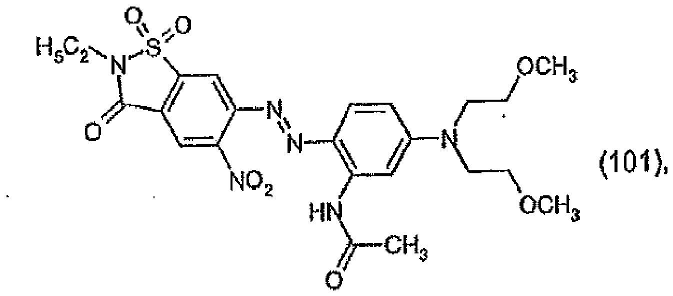 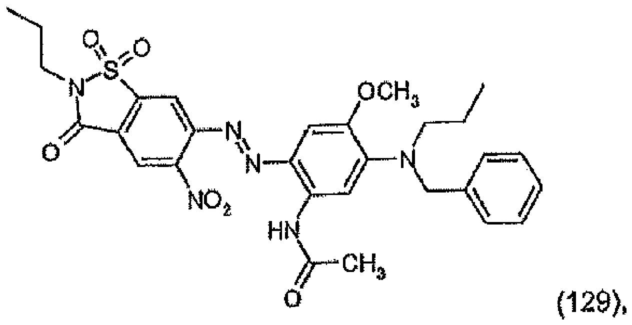 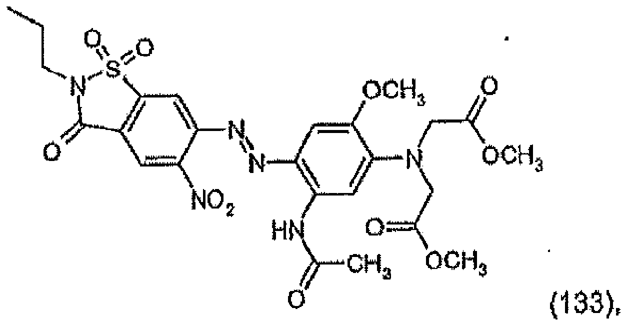 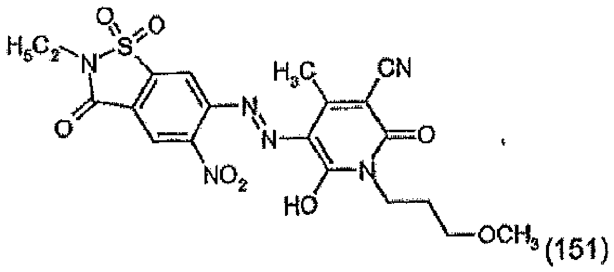 oder

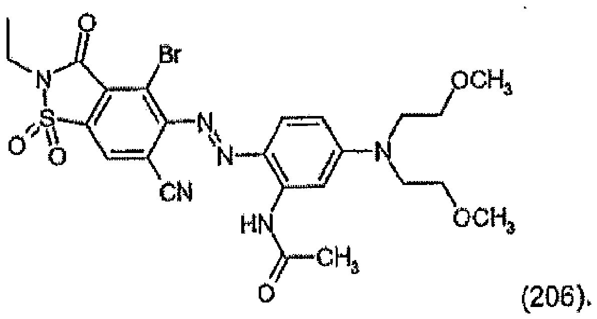

10. Verfahren zur Herstellung eines Azofarbstoffs der Formel (1) nach Anspruch 1, welches die Diazotierung einer Verbindung der Formel (3) 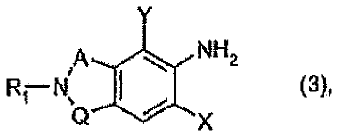 worin R₁ und A, Q, X und Y wie in Anspruch 1 definiert sind, nach einem herkömmlichen Verfahren und anschließendes Kuppeln der diazotierten Verbindung mit einer Kupplungskomponente der Formel K-H, worin K wie in Anspruch 1 definiert ist, umfasst.

11. Verfahren zum Färben oder Bedrucken von halbsynthetischen oder synthetischen hydrophoben Fasermaterialien, worin ein Farbstoff der Formel (1) nach Anspruch 1 auf die Materialien aufgetragen oder in diese eingefügt wird.

12. Verwendung eines Farbstoffs der Formel (1) nach Anspruch 1 zum Färben oder Bedrucken von halbsynthetischen und insbesondere synthetischen hydrophoben Fasermaterialien, insbesondere Textilmaterialien.

13. Halbsynthetisches oder insbesondere synthetisches hydrophobes Fasermaterial, insbesondere ein Textilmaterial, welches mittels eines Verfahrens nach Anspruch 11 gefärbt oder bedruckt ist.

## Revendications

1. Colorant azo de formule : 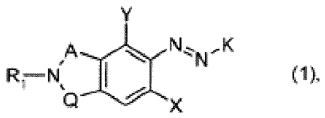 dans laquelle :
- soit A représente -CO- et Q représente -SO₂- soit A représente -SO₂- et Q représente -CO- ;
- R₁ représente alkyle en C₁-C₆, benzyle, allyle, -CₙH₂ₙ-COOR ou -CₙH₂ₙ-CN, n étant un nombre de 1 à 3 et R représentant hydrogène ou alkyle en C₁-C₆ ;
- X représente nitro, cyano ou halogène ;
- Y représente hydrogène, nitro, cyano ou halogène ; et
- K représente le radical d'un composant de couplage de la série du benzène, du naphtalène, de la pyrazolone, de la 6-hydroxypyridone-(2) ou de l'arylamide d'acide acétoacétique.

2. Colorant azo de formule (1) selon la revendication 1, dans laquelle K représente un radical de formule (2a)-(2d) : 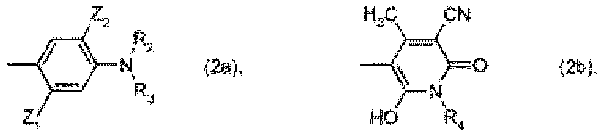 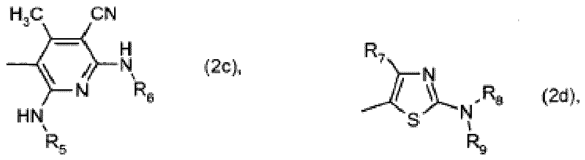 dans lesquelles :
- Z₁ représente hydrogène, halogène, alkyle en C₁-C₆, alcoxy en C₁-C₆ qui est non substitué ou substitué par un ou plusieurs groupes alkyl en C₁-C₃-carbonyloxy, benzyle, -NH-SO₂-R₁₀ ou -NH-CO-R₁₁, R₁₀ et R₁₁ représentant méthyle ou éthyle ;
- Z₂ représente hydrogène, halogène ou alcoxy en C₁-C₆ qui est non substitué ou substitué par un ou plusieurs groupes alkyle en C₁-C₃-carbonyloxy ;
- R₂ et R₃ représentent chacun indépendamment l'un de l'autre hydrogène, vinyle, allyle ou alkyle en C₁-C₆ qui est non substitué ou substitué par hydroxy, cyano, alkyl en C₁-C₆-carbonyloxy, alkyl en C₁-C₆-oxycarbonyle, alcoxy en C₁-C₆ ou aryle en C₆-C₂₄ ;
- R₄ représente hydrogène, vinyle, allyle ou alkyle en C₁-C₆, qui est non substitué ou substitué par cyano, carboxy, hydroxy, alcoxy en C₁-C₆, alcoxyalcoxy en C₂-C₈ ou aryle en C₆₋₂₄ ;
- R₅ et R₆ représentent chacun indépendamment l'un de l'autre hydrogène, vinyle, allyle ou alkyle en C₁-C₆ qui est non substitué ou substitué par cyano, carboxy, hydroxy, alcoxy en C₁-C₆-, alcoxyalcoxy en C₂-C₈- ou aryle en C₆-C₂₄ ;
- R₇ représente alkyle en C₁-C₆, aryle en C₆-C₂₄ ou benzyle ; et
- R₈ et R₉ représentent chacun indépendamment l'un de l'autre hydrogène, vinyle, allyle ou alkyle en C₁-C₆ qui est non substitué ou substitué par cyano-, carboxy, hydroxy, alcoxy en C₁-C₆- ou aryle en C₆-C₂₄.

3. Colorant azo de formule (1) selon l'une des revendications 1 ou 2, dans lequel Y représente hydrogène ou bromo.

4. Colorant azo de formule (1) selon l'une quelconque des revendications 1 à 3, dans lequel R₁ représente éthyle.

5. Colorant azo de formule (1) selon la revendication 2, dans lequel K désigne un radical de formule (2a), où Z₁ représente méthyle ou acétylamino, Z₂ représente hydrogène ou méthoxy et R₂ et R₃ représentent chacun indépendamment l'un de l'autre éthyle, n-propyle, allyle, 2-méthoxyéthyle, 2-cyanoéthyle, benzyle, méthoxycarbonylméthyle ou méthoxycarbonyléthyle.

6. Colorant azo de formule (1) selon la revendication 2, dans lequel K désigne un radical de formule (2b), où R₄ représente éthyle ou 3-méthoxypropyle.

7. Colorant azo de formule (1) selon la revendication 2, dans lequel K désigne un radical de formule (2c), où R₅ et R₆ représentent chacun indépendamment de l'autre hydrogène, 2-méthoxyéthyle, 3-méthoxypropyle, 3-(2-méthoxyéthoxy)propyle, phényle ou benzyle.

8. Colorant azo de formule (1) selon la revendication 2, dans lequel K désigne un radical de formule (2d), où R₇ représente phényle et R₈ et R₉ désignent éthyle.

9. Colorant azo de formule (1) selon la revendication 2 de formule :

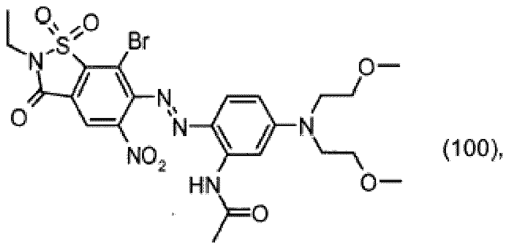

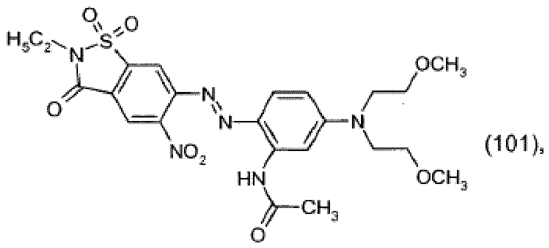

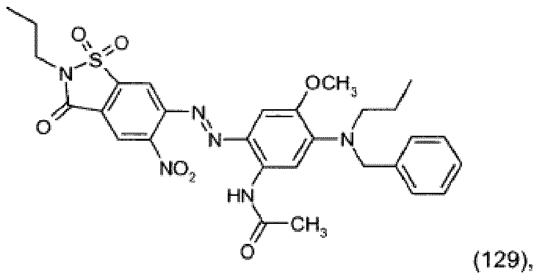

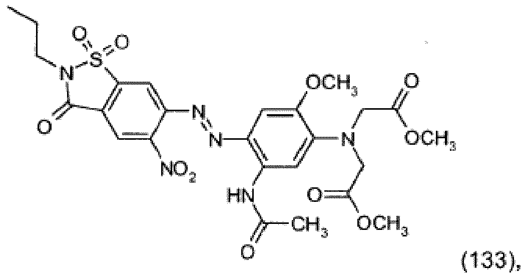

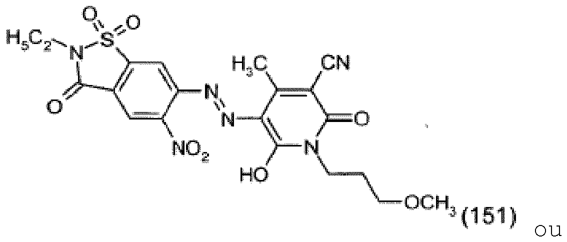

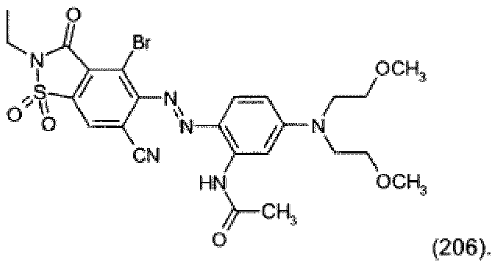

10. Procédé de préparation d'un colorant azo de formule (1) selon la revendication 1, qui comprend la diazotation d'un composé de formule (3) : 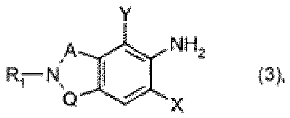 dans laquelle R₁et A, Q, X et Y sont tels que définis dans la revendication 1, conformément à une méthode classique, puis le couplage du composé diazoté avec un composant de couplage de formule K-H, où K est tel que défini dans la revendication 1.

11. Procédé de teinture ou d'impression de matières fibreuses hydrophobes semi-synthétiques ou synthétiques, procédé dans lequel un colorant de formule (1) selon la revendication 1 est appliqué auxdites matières ou incorporé dans celles-ci.

12. Utilisation d'un colorant de formule (1) selon la revendication 1 dans la teinture ou l'impression de matières fibreuses hydrophobes semi-synthétiques et en particulier synthétiques, plus particulièrement de matières textiles.

13. Matière fibreuse hydrophobe semi-synthétique ou en particulier synthétique, plus particulièrement une matière textile, teinte ou imprimée par le procédé selon la revendication 11.
